**Europäisches Patentamt**

(19) **European Patent Office**

**Office européen des brevets**

(11) Publication number: **0 275 259 B1**

## EUROPEAN PATENT SPECIFICATION

(12)

(45) Date of publication of patent specification:
**10.07.91 Bulletin 91/28**

(21) Application number: **87901993.3**

(22) Date of filing: **06.03.87**

(86) International application number:
**PCT/US87/00480**

(87) International publication number:
**WO 87/05422 11.09.87 Gazette 87/20**

(51) Int. Cl.⁵: **G06F 15/336**

---

(54) **OPTIMAL PARAMETRIC SIGNAL PROCESSOR.**

---

(30) Priority: **07.03.86 US 837260**

(43) Date of publication of application:
**27.07.88 Bulletin 88/30**

(45) Publication of the grant of the patent:
**10.07.91 Bulletin 91/28**

(84) Designated Contracting States:
**AT BE CH DE FR GB IT LI LU NL SE**

(56) References cited:
**IEEE INTERNATIONAL CONFERENCE ON
ACOUSTICS, SPEECH AND SIGNAL PROCES-
SING, 26th-29th March 1985, vol. 4, pages
1858-1861, IEEE, New York, US; G. CARAYAN-
NIS et al.: "A new look on the parallel imple-
mentation of the Shür algorithm for the
solution of Toeplitz equations"**

(73) Proprietor: **ADLER RESEARCH ASSOCIATES
2333 Morris Avenue
Union, NJ 07083 (US)**

(72) Inventor: **CARAVANNIS, George
32 Paparigopoulou St.
GR-11473 Athens (GR)**
Inventor: **HALKIAS, Christos
4, K. Paloma St.
Psyhiko, Athens (GR)**
Inventor: **MANOLAKIS, Dimitris
33 Westgate Road, A6
Chestnut Hill, MA 02167 (US)**
Inventor: **KOUKOUTSIS, Elias
119 Third of September Street
GR-11251 Athens (GR)**

(74) Representative: **Strehl, Schübel-Hopf,
Groening
Maximilianstrasse 54 Postfach 22 14 55
W-8000 München 22 (DE)**

EP 0 275 259 B1

## Description

FIELD OF THE INVENTION.

The present invention relates to the field of signal processing, and in particular, parametric signal processing.

## BACKGROUND OF THE INVENTION

Parametric signal processing is used in many areas, such as speech and image analysis, synthesis and recognition, neurophysics, geophysics, array processing, computerized tomography, communications and astronomy, to name but a few.

One example of signal processing of particular importance is the linear prediction technique, which is used for speech analysis, synthesis and recognition, and for the processing of seismic signals, to enable the reconstruction of geophysical substrata. The linear prediction technique employs a specialized autocorrelation function.

Another form of signal processing which finds a multitude of applications, is the determination of an optimal (in the least square sense) finite impulse response filter. A signal processor employing such a technique works with the autocorrelation of the filter input signal and the cross-correlation between the input and the desired response signal, and may be used in many of the above-mentioned applications.

Still another form of signal processing of particular importance is known in the art as "L-step ahead" prediction and filtering, for solving the "optimum lag" problem. This technique is especially useful in designing spiking and shaping filters. Signal processors which perform this function employ a specialized autocorrelation function which also takes into account a time lag associated with the system.

Generally, as the order of the system under investigation increases, the complexity of the signal processing necessary to provide useful information also increases. For example, using the general Gaussian elimination procedure, a system of order p can be processed in "$O(p^3)$" steps, indicating the number of steps as being "on the order of" $p^3$, i.e., a function of p cubed. Thus, it will be appreciated that a system having order of p = 100 requires on the order of one million processing steps to process the signal, a limitation of readily apparent significance, especially where real time processing is required.

Signal processing techniques have been developed which have reduced the number of operations required to process a signal. One such method has been based on a technique developed by N. Levinson, which requires $O(p^2)$ sequential operations to process the signal. In particular, the "Levinson technique" requires $O(2 \cdot p^2)$ sequential operations in order to process the signal. An improved version of this technique, known as the "Levinson-Durbin" technique requires $O(1 \cdot p^2)$ sequential operations to process the signal. Neither of these schemes is suitable for parallel implementation. On the general subject of the Levinson and Levinson-Durbin techniques, see N. Levinson, "The Wiener RMS (Root-Mean-Square) Error Criterion in Filter Design and Prediction", J. Math Phys., Vol. 25, pages 261-278, January 1947 ; and J. Durbin, "The Filtering of Time Series Models", Rev. Int. Statist. Inst., Vol. 28, pages 233-244, 1960.

Although they represent an order of magnitude improvement over the Gaussian elimination technique, the Levinson and Levinson-Durbin techniques are too slow for many complex systems where real time processing is required.

Another way of implementing the main recursion of the Levinson-Durbin technique, for the computation of what is widely known as "lattice coefficients", was developed by Schur in 1917, in order to establish a system stability criterion. See I. Schur, "Über Potenzreihen Die Im Innern Des Einheitskreises Beschränkt Sind", J. Reine Angewandte Mathematik, Vol. 147, 1917, pages 205-232. Lev-Ari and Kailath, of Stanford University, have developed a different approach, based on the Schur and Levinson techniques, which provides a triangular "ladder" structure for signal processing. The Lev-Ari and Kailath technique uses the signal, per se, as the input to the processor, rather than autocorrelation coefficients, and it is used in the signal modelling context. See H. Lev-Ari and T. Kailath, "Schur and Levinson Algorithms for Non-Stationary Processes", IEEE International Conference on Acoustics, Speech and Signal Processing, 1981, pages 860-864.

In another modification to the Schur technique, Le Roux and C. Gueguen re-derived the Schur algorithm, giving emphasis to the finite word length implementation, using fixed point arithmetics. See Le Roux and Gueguen, "A Fixed Point Computation of Partial Correlation, Coefficients", IEEE Transactions on Acoustics, Speech and Signal Processing, June 1977, pages 257-259.

Kung and Hu, have developed a parallel scheme, based on the Schur technique, which uses a plurality of parallel processors, to process a signal, having order p, in $O(p)$ operations, a significant improvement compared to the Levinson-Durbin technique. See Kung and Hu, "A Highly Concurrent Algorithm and Pipelined Architecture

2

for Solving Toeplitz Systems", IEEE Transactions on Acoustics, Speech and Signal Processing, Vol. ASSP-31, No. 1, February 1983, pp. 66-76. However, the application of the Kung and Hu technique is severely limited insofar as it requires that the number of processors be equal to the order of the system to be solved. Thus, the Kung and Hu technique cannot process a signal produced by a system having an order greater than the number of parallel processors. System complexity is therefore a major limiting factor in using the Kung and Hu technique, insofar as many complex systems may have orders much higher than the number of parallel processors currently available in modern VLSI or other technology.

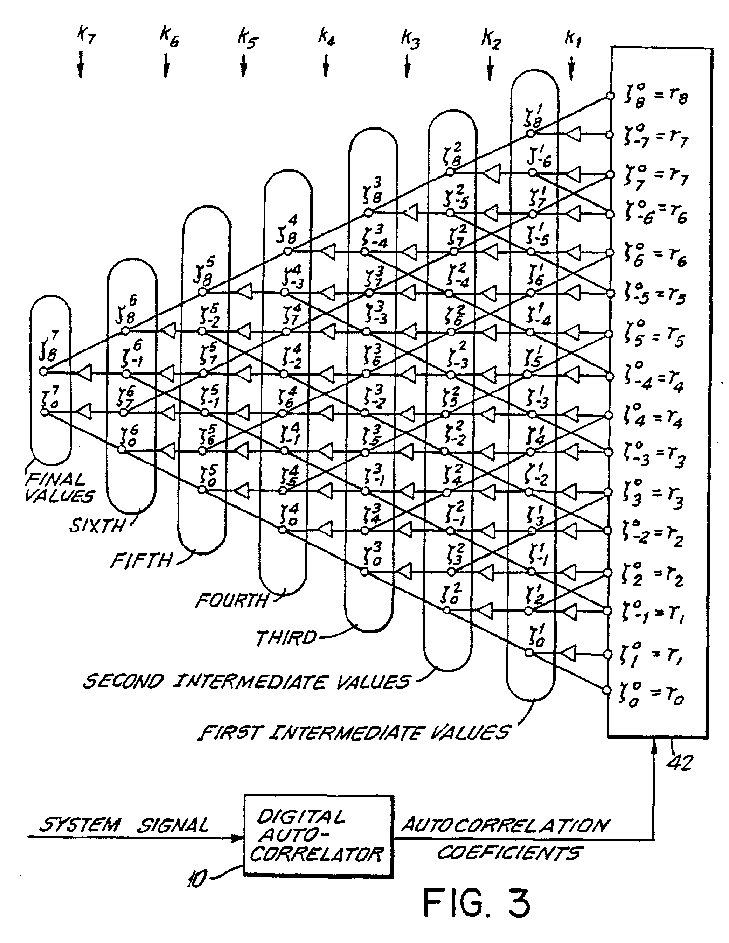

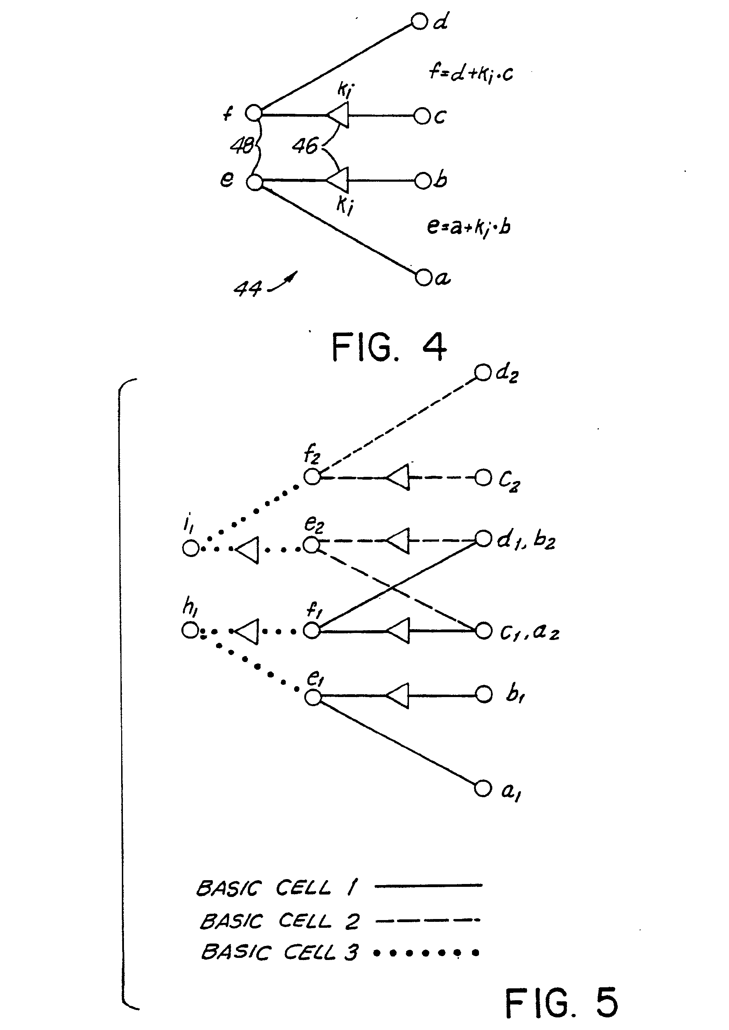

C.G. Carayannis et al. have described a signal processing system which includes the features set forth in the first part of each of claims 1 to 4, and which uses a purely parallel implementation were the number of processors equals the order of the system, and a purely order recursive technique where only a single processor is employed. See C.G. Carayannis et al., "A New Look on the Parallel Implementation of the Shur Algorithm for the Solution of Toeplitz Equations", IEEE International Conference on Acoustics, Speech and Signal Processing, Vol. 4, March 26-29, 1985, pp. 1858-1861, particularly Figures 3 and 4.

## SUMMARY OF THE INVENTION

It is an object of the present invention to provide a signal processor and processing method which can be implemented using a lesser plurality of processing units to process a signal in a "partitioned" parallel" manner.

The invention meets this object by a signal processor, as characterized in claims 1 and 3 and a processing method has characterized in claims 2 and 4, claims 1 and 2 relating to the symmetrical case and claims 3 and 4 relating to the non-symmetrical case.

The invention provides a linear prediction signal processor which also forms the basis for L-step ahead and least square-finite impulse response (LS-FIR) processors.

## BRIEF DESCRIPTION OF THE DRAWINGS

These and other objects, aspects and embodiments of the present invention will be described in more detail below with reference to the following drawing figures, of which :

FIG. 1 illustrates the "superlattice" processing structure, for the non-symmetrical case, in accordance with the present invention ;

FIG. 2 illustrates the signal processing structure in accordance with the present Invention, which allows the direct predictor coefficients $a_i$, to be derived from the lattice coefficients $k_i$ produced by the structure of FIG. 1 ;

FIG. 3 illustrates the "superlattice" processing structure for the symmetrical case, in accordance with the present invention ;

FIG. 4 illustrates a "basic cell" in accordance with the present invention ;

FIG. 5 illustrates the repeated use of the basic cell of FIG. 4, in order to provide the processing structure of FIGS. 1 and 3 ;

FIG. 6 illustrates the implementation of the superlattice structure using three basic cells, for a system having order 8 ;

FIG. 7 illustrates the signal flow through real and virtual processors which implement the arrangement of FIG. 6 ; and

FIG. 8 illustrates the hardware implementation of the arrangement shown in FIGS. 6 and 7, in accordance with the present invention, illustrating the three basic cells and associated hardware.

## DETAILED DESCRIPTION OF THE INVENTION

### The Non-Symmetrical Case

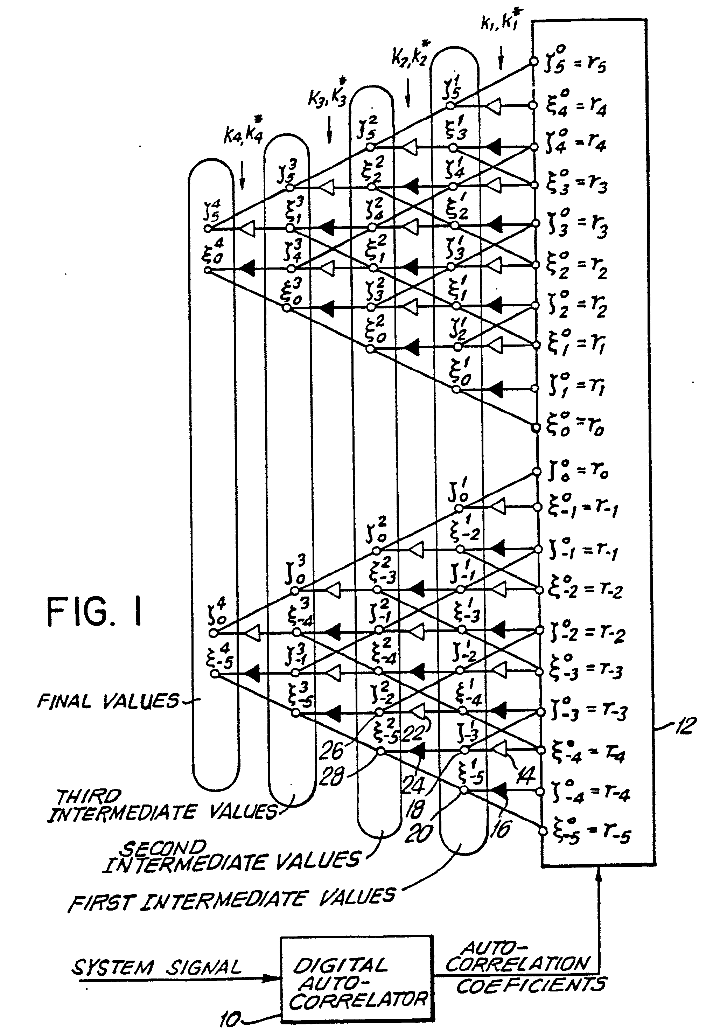

With reference to Fig. 1, there is shown a "superlattice" structure of multipliers, designated by triangles, and adders, designated by circles, arranged in a manner to process a signal in order to produce a linear predictor for a non-symmetrical system. This superlattice structure also forms the basis for L-step ahead and LS-FIR processors.

As shown in the figure, a signal from a system, having order P, such as a seismic signal, is applied to a well known digital autocorrelator 10, which produces autocorrelation coefficients $r_{-5}$ through $r_5$. The autocorrelation coefficients are delivered to an input device 12, such as a digital register, or buffer memory, for application to the superlattice structure. With the exception of autocorrelation coefficients $r_{-5}$, $r_0$ and $r_5$, each autocorrelation coefficient is applied to a pair of multipliers which function to multiply each coefficient by a pair of "lattice coef-

ficients" $k_n$ and $k_n*$, $k_n$ being the normal lattice coefficient, and $k_n*$ being the "adjoint" lattice coefficient. The multipliers indicated by white triangles function to multiply the autocorrelation coefficients by the normal lattice coefficient $k_n$, while the multipliers indicated by the black triangles function to multiply the autocorrelation coefficients by the adjoint lattice coefficients $k_n*$. Production of the normal and adjoint lattice coefficients will be described below.

The two products produced by multiplying each autocorrelation coefficient by the normal and adjoint lattice coefficients are added, in the adders indicated by the circles in the figure, to an adjacent pair of autocorrelation coefficients, to produce a set of first intermediate value $J_n^1$, where n = − 3, − 2, − 1, 0, 2, 3, 4, 5, and $\xi_m^1$, wehre m = − 5, − 4, − 3, − 2, 0, 1, 2, 3. For example, the autocorrelation coefficient $r_{-4}$, is multiplied by $k_1$ and $k_1*$ in multipliers 14 and 16, respectively, and the products are added to the pair of autocorrelation coefficients $r_{-3}$ and $r_{-5}$, which are adjacent to coefficient $r_{-4}$, in adders 18 and 20, respectively. Similarly, autocorrelation coefficient $r_{-3}$, after multiplication by lattice coefficients $k_1$ and $k_1*$, is individually added to the adjacent pair autocorrelation coefficients $r_{-4}$ and $r_{-2}$. The same process takes place for autocorrelation coefficients $r_{-2}$ through $r_4$, to produce the set of first intermediate values, as shown.

For the sake of continuity, the autocorrelation coefficients $r_{-5}$ through $r_5$, are also designated as $J_n^0$ and $\xi_m^0$, where n = − 4 to 5 and m = − 5 to 4.

The lattice coefficients are calculated as follows :

$$k_{m+1} = - J_{m+1}^m / J_o^m$$
$$k*_{m+1} = - \xi_{m+1}^m / \xi_o^m$$

The lattice coefficients $k_1$ and $k_1*$ are produced directly from the autocorrelation coefficients, while the second set of lattice coefficients, $k_2$ and $k_2*$, are calculated from the first intermediate values.

In a manner similar to that performed to generate the first intermediate values, selected pairs of adjacent first intermediate values, for example, $\xi_{-4}^1$ and $J_{-3}^1$ are multiplied by the normal and adjoint lattice coefficients $k_2$ and $k_2*$, respectively, in multipliers 22 and 24. Two first intermediate values ($J_{-2}^1$ and $\xi_{-5}^1$, adjacent to, and on either side of the selected pair, are added to the products produced by multipliers 22 and 24, respectively, to produce two second intermediate values $J_{-2}^2$ and $\xi_{-5}^2$. The remaining second intermediate values are generated in a similar manner, namely, by multiplying a selected pair of adjacent first intermediate values by the normal and adjoint lattice coefficients $k_2$ and $k_2*$, and by adding to the products, the first intermediate values adjacent to, and on either side of, the selected pair.

It will also be seen that, following this signal flow, the third intermediate values and final intermediate values are generated in a similar manner.

The lattice coefficients $k_l$ completely characterize the linear predictor and can be used instead of the direct predictor coefficients. In fact, they are preferred for storage, transmission and fast speech synthesis, since they have the considerable advantages of being ordered, bounded by unity and can readily be used for stability control, efficient quantization, and the like. Since $r_0$ corresponds to the energy of the signal, and will therefore have the greatest amplitude of any of the signals processed by the superlattice, all variables can be normalized with respect to $r_0$, thus facilitating the use of "fixed point" processing with its attendant advantages of precision, speed, and processing simplicity.

The arrangement shown in Fig. 1 can produce lattice coefficients for a system of the type $Ra = − d$, where R has a Toeplitz structure. A detailed analysis of this technique is given by G. Carayannis et al., "A New Look on the Parallel Implementation of the Schur Algorithm for the Solution of Toeplitz Equations", IEEE International Conference on Acoustics, Speech and Signal Processing, March 26-29, 1985.

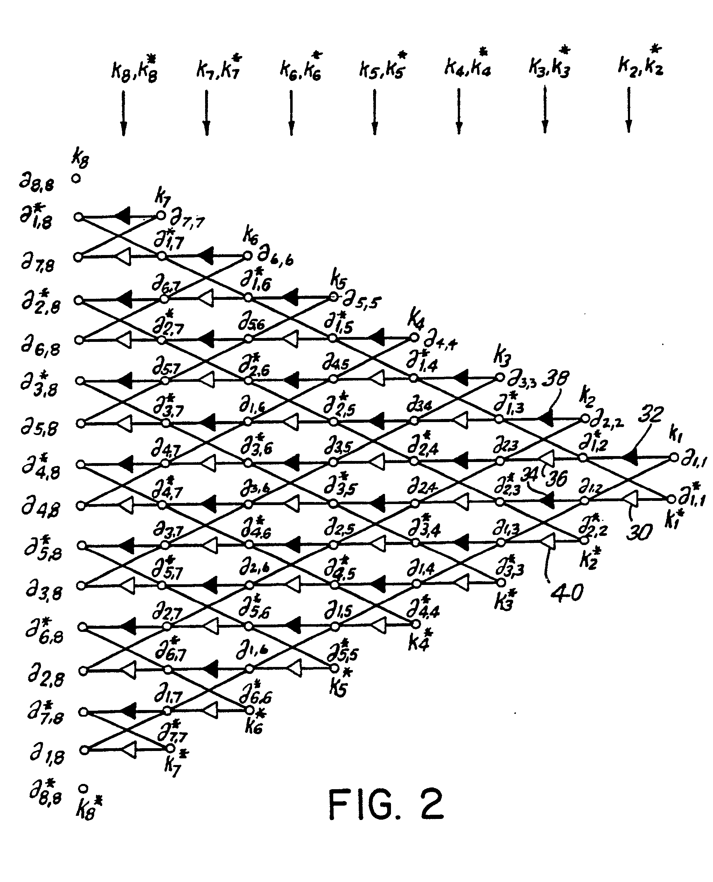

Although the lattice coefficients $k_l$ an $k_l*$ are usually preferred, the direct predictor coefficients $a_l$, which are useful in spectral estimation, for example, can be derived from the lattice coefficients using the processing structure of Fig. 2. As shown, the lattice coefficients $k_1$ and $k_1*$ are applied to a pair of multipliers 30 and 32, which function to multiply those lattice coefficients by the second lattice coefficients $k_2$ and $k_2*$, respectively, to produce a first set of products $a_{1,2}$ and $a*_{1,2}$, respectively. These products are then multiplied, in multipliers 34 and 36, respectively, by $k_3*$ and $k_3$, and added to $k_2*$ and $k_2$, respectively, to produce the values $a*_{2,3}$ and $a_{2,3}$, respectively. Also, the value of the lattice coefficients $k_2$ and $k_2*$ are multiplied by $k_3*$ and $k_3$, respectively, in multipliers 38 and 40, and the intermediate values $a*_{1,2}$ and $a_{1,2}$ are added to these products to produce further intermediate values $a*_{1,3}$ and $a_{1,3}$, respectively. This process continues until the direct filter coefficients $a_{1,8}$ through $a_{8,8}$ and $a*_{1,8}$ through $a*_{8,8}$ are produced.

## The Symmetrical Case

A special situation exists where the system to be analyzed can be characterized by $R\underline{a} = -\underline{d}$, where R has a symmetrical Toeplitz structure, as in the case of auto-regressive linear prediction. In such cases, the superlattice structure of Fig. 1 is simplified to the symmetrical superlattice form shown in Fig. 3, since $r_i = r_{-i}$; $k_i = k_i^*$ and $J_l^m = \xi_{-l}^m$, for the symmetrical case. Thus, the two triangular lobes of Fig. 1 become identical, so that one of them can be omitted, allowing the elimination of half of the signal processing. The signal processing structure for the symmetrical case, shown in Fig. 3, provides linear prediction, or auto-regressive modelling, by calculating the lattice coefficients, or in the symmetrical case, the "PARCOR" (partial correlation) coefficients.

It should initially be noted that with this signal processing structure (as well as that shown in Fig. 1) there is no redundancy. That is, each J appearing in the processor is produced only once. Additionally, only those signals needed for the production of lattice coefficients, or PARCORs are involved. Thus ; the signal processing structure shown in Fig. 3 (and in Fig. 1) represent optimal processing schemes.

The signal processor illustrated in Fig. 3 can be implemented as described with reference to Figs. 4-8, below. For the purposes of simplicity, this discussion is limited to the symmetrical case. However, the implementation of the non-symmetrical case will become apparent in view of the description of the symmetrical case.

In a manner similar to that shown for the non-symmetrical case of Fig. 1, a system signal is applied to a digital autocorrelator 10, which produces autocorrelation coefficients which characterize the symmetrical system, namely, $r_0$ through $r_8$. The coefficients are applied to an input device 42, such as a digital register or memory. Note that the signal processor of Fig. 3 receives a signal from a system having an order of 8, whereas the system in Fig. 1 receives a signal from a system having an order of 5.

As with the signal processor of Fig. 1, the signal processor of Fig. 3 takes each autocorrelation coefficient, except the first and last, namely $r_0$ and $r_8$, and multiplies it by the first lattice coefficient $k_1$, which is calculated from $r_0$ and $r_1$ ($J_0^0$, $J_1^0$), according to the general formula

$$k_p = - J_p^{p-1} / J_0^{p-1}.$$

The product of each such multiplication is added, individually, to the adjacent two autocorrelation coefficients, to produce the first intermediate values $J_n^1$, where n = 0, 2 to 8 and $-6$ to $-1$. For example, autocorrelation coefficient $r_1$, designated as $J_1^0$ and $J_{-1}^0$, for the sake of conformance with the intermediate variables, is multiplied by lattice coefficient $k_1$, and autocorrelation coefficients $r_0$ and $r_2$ are added, individually, to the product, to produce a pair of first intermediate values $J_0^1$ and $J_2^1$, respectively. Similarly, the next two first intermediate values, namely $J_{-1}^1$ and $J_3^1$ are produced by multiplying autocorrelation coefficient $r_2$ by the lattice coefficient $k_1$, and adding, individually, the adjacent autocorrelation coefficients, namely, $r_1$ and $r_3$ to the products.

The second intermediate values can be calculated from the first intermediate values in a similar manner. First, $k_2$ can be calculated from the ratio of $J_2^1$ and $J_0^1$ in accordance with the formula given above. Then, second intermediate values $J_3^2$ and $J_0^2$, for example, are calculated by multiplying the first intermediate values $J_{-1}^1$ and $J_2^1$ by the lattice coefficient $k_2$, and adding the adjacent first intermediate values $J_3^1$ and $J_0^1$ to the products, individually. The signal processing continues until the final values $J_8^7$ and $J_0^7$ are obtained, from which the last lattice coefficient $k_8$ can be calculated from the above formula.

If direct predictor coefficients are desired, the processing structure shown in Fig. 2 can be employed for the symmetrical case as well as the non-symmetrical case. However, the processing structure of Fig. 2 is somewhat simplified for the symmetrical case since $k_n = k_n^*$.

Returning to Fig. 3, several points should now be noted. Although drawn as a triangular lobe, to illustrate the precise details of the signal processing, it will be appreciated that the various items of hardware, namely, the multipliers, designated by triangles, and the adders, designated by circles, can be comprised of a single set of 14 multipliers and 14 adders which first function to produce the first intermediate values, then the second intermediate values, and so on through the final values. Furthermore, if 14 multipliers and adders are not available, a lesser number can be shared within any given group of intermediate values.

Specifically, Fig. 4 illustrates a "basic cell" 44 which comprises a pair of multipliers 46 and a pair of adders 48. As shown in Fig. 4, the basic cell 44 functions to produce a signal $e = a + k_i \cdot b$, and a signal $f = d + k_i \cdot c$.

The basic cell can be realized with one "two-cycled" processor, or two "one-cycled" processors, to provide signals e and f. The use of the basic cell, as defined in Fig. 4, provides a homogeneous configuration in the hardware, in the sense that the repetition of the same basic cell suffices to produce the whole superlattice structure.

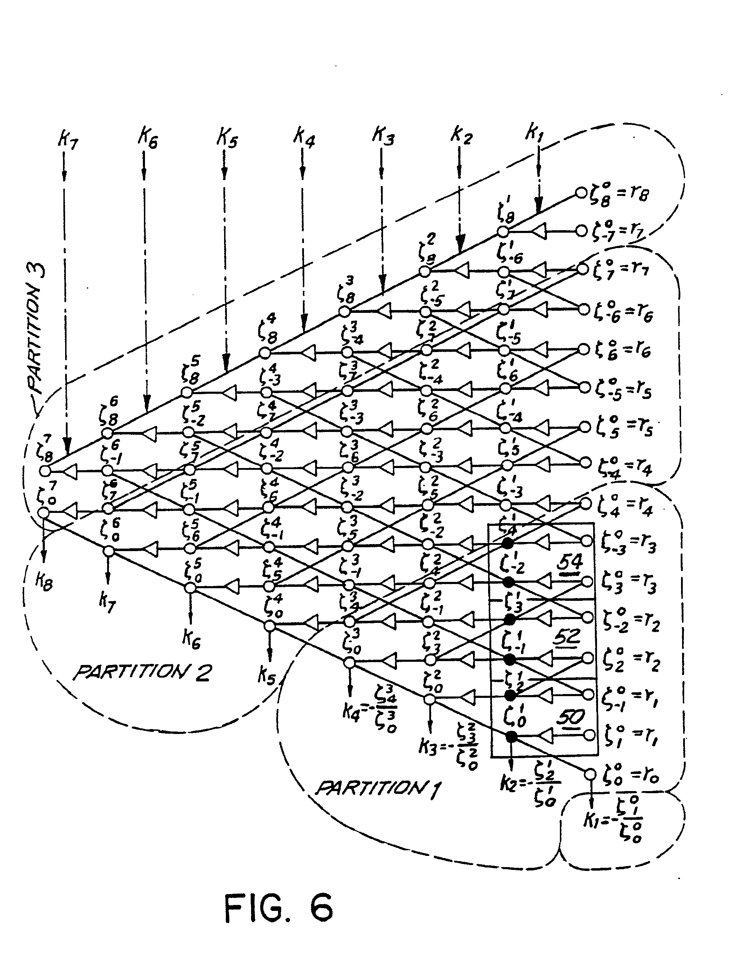

More specifically, Fig. 5 illustrates three basic cells denoted by solid, dashed and dotted lines, respectively. By merely duplicating the processing unit illustrated in Fig. 4, a superlattice of any size can be "constructed", to process a signal of virtually any complexity. For example, the superlattice of Fig. 5 will process a signal from a system having order 3. To process a signal from a system having order 4, a first additional basic cell can be "placed on top of" the basic cell 2, to produce first intermediate values $e_3$ and $f_3$ (not shown). A second additional basic cell would similarly be added, to receive as inputs, $e_2$, $f_2$, $e_3$ and $f_3$, to produce outputs $h_2$, $i_2$ (not shown). Finally, a third additional basic cell would be used to receive $h_1$, $i_1$, $h_2$ and $i_2$ as inputs, and produce outputs $j_1$ and $l_1$ (also not shown).

## Fully Parallel Implementation

With recent advances in VLSI technology, the present invention is able to take advantage of the presence of more than one processor, in a multiprocessor environment, wherein each parallel processor (or pair of processors) functions as a "basic cell".

Returning to Fig. 3, a "fully parallel" implementation is one in which all first intermediate values are produced essentially simultaneously, in parallel, and then, at a later time, all second intermediate values are produced in parallel, and so on, until the signal parameters have propagated through the entire superlattice. The fully parallel implementation of the superlattice is optimal in terms of signal processing speed.

For a fully parallel implementation, at least p-1 basic cells must be provided for a system having order p. From Fig. 3 it can be seen that seven basic cells are required for a system having order 8. In operation, the autocorrelation coefficients are delivered to the input device 42, such as a digital register or buffer memory, and applied to the seven basic cells substantially simultaneously, to produce the set of first intermediate values. These intermediate values are then "fed back" into the input device 42 for reapplication to the processing units. However, since there are only fourteen of the first intermediate values, compared to the sixteen input values generated from the autocorrelation coefficients, during the second step, only six of the seven basic cells are utilized, rather than all seven, to produce the set of second intermediate values. The second intermediate values are similarly "fed back" into the input device 42 and reapplied to five of the basic cells, to produce the set of third intermediate values, and so on until the set of sixth intermediate values are "fed back" to a single basic cell, to produce the final values.

It will be seen that a sequence of p-1 parallel steps are required to compute the PARCORs. In other words, the complexity of the signal processor is on the order of p, and p-1 processing units are required For the implementation of the fully parallel technique. This compares favorably to the technique proposed by Kung and Hu, cited above, which requires more processing elements. A computer program, written in Pascal, For simulating the fully parallel implementation, is given in Appendix 1, below.

## Order Recursive Implementation

It will be appreciated from an inspection of Fig. 5 that the entire superlattice structure of the signal processor in accordance with Fig. 3 can be built using a single basic cell, as a "building block". For example, the basic cell shown in Fig. 4 can first function as basic cell 1, in Fig. 5, to process values a1, b1, c1 and d1 to produce intermediate values e1 and f1, from which a lattice coefficient can be calculated. However, in order to determine the next lattice coefficient, the basic cell of Fig. 4 must function as basic cell 2 of Fig. 5. In doing so, it processes values a2, b2, c2 and d2 to produce intermediate values e2 and f2. The values a2 and b2 are actually the same as two of the inputs to the first basic cell, namely c1 and d1.

Finally, the basic cell of Fig. 4 is used as basic cell 3 in Fig. 5, to calculate h1 and i1 based on e1, f1, e2 and f2, and the last lattice coefficient can be calculated from h1 and i1.

It will be appreciated that a superlattice of any size can be constructed from a single basic cell, in order to fully process the autocorrelation coefficients associated with a system having virtually any order.

In implementing the order recursive technique, with reference to Fig. 3, the autocorrelation coefficients from digital autocorrelator 10 are applied to the input device 42 and stored therein. The single basic cell would first produce $J_0^1$ and $J_2^1$ based on autocorrelation coefficients $r_0$, $r_1$ and $r_2$, and the lattice coefficient $k_1$, which in turn, is calculated from $r_1$ and $r_0$. The values of $k_1$, $J_0^1$ and $J_2^1$ are stored for later use. Then, $k_2$ would then be produced from $J_0^1$ and $J_2^1$, and $k_2$, $J_0^1$ and $J_2^1$ would be stored for further use. The single basic cell would then produce $J_{-1}^1$ and $J_3^1$ based on autocorrelation coefficients $r_1$, $r_2$ and $r_3$. These values would be "fed back" to the input of the basic cell, along with values $J_0^1$ and $J_2^1$ in order to produce $J_0^2$ and $J_3^2$, based on those values and $k_2$. At this point,

the next lattice coefficient, $k_3$, can be produced from $J_0^2$ and $J_3^2$, and stored with the other lattice coefficients.

This process of recursively "feeding back" the intermediate variables into the basic cell to produce further intermediate values, to allow the production of further lattice coefficients, is repeated until the entire signal is processed in accordance with the scheme illustrated in Fig. 3.

Since only one basic cell is used in this case, a signal processor which uses the order recursive implementation is a strictly sequential machine requiring p(p-1) machine cycles (on the order of p squared) to process a signal from a system having order p. However, since the single basic cell is the only computational structure involved, it is very easily implemented. Further, where the PARCORs are needed instead of the direct filter coefficients, the order recursive technique of the present invention is somewhat faster and much simpler than the Levinson-Durbin technique, but the LeRoux-Gueguen technique has the same complexity.

A computer program, written in Pascal, for simulating the order recursive signal processor, is set forth in Appendix 2, below.

## Partitioned Parallel Implementation

As will be appreciated, the implementation which produces the most rapid signal processing is the fully parallel implementation, discussed above. However, that technique has the disadvantage of requiring almost as many basic cells (p-1) as the order of the system to be investigated (p). Thus, for systems having a very large order, a fully parallel implementation may not be achievable because of lack of a sufficient number of processors. Also, a fully parallel implementation may in some cases be undesirable because of economics achievable through the use of fewer processors.

At the other extreme, the simplest way to implement the signal processor is with the use of but a single basic cell, in the order recursive implementation. However, that implementation has the disadvantage of being the slowest, requiring on the order of $p^2$ operations in order to fully process the signal.

The present invention provides a compromise between the constraints of hardware complexity and processing speed through the use of "partitions" which "cut through" the superlattice structure, in parallel, but which are implemented in a time sequential manner.

Briefly, the partitioned parallel implementation employs the use of a plurality of basic cells, the number of basic cells being less than p-1, where p is the order of the system. By exploiting the presence of a plurality of parallel processors, in a single system, such as on a VLSI chip, the signal processor in accordance with the present invention will be capable of processing signals associated with virtually any system, of any order, faster than any presently known signal processor, with the exception of that proposed by Kung and Hu. However, as discussed above, the Kung and Hu implementation requires the use of as many processors as the order of the system, a requirement which will often be impossible to achieve. Furthermore, the fully parallel implementation is as fast as the Kung and Hu technique.

The signal flow through the superlattice for the partitioned parallel implementation will be discussed with reference to Fig. 6, which illustrates a superlattice structure for processing a signal from a system having order 8. The signal is processed using only 3 basic cells, namely 50, 52, and 54, which process the autocorrelation coefficients r0 through r4 to produce the set of first intermediate values $J_n^1$, $n = -2, -1, 0, 2, 3$, and 4.

These first intermediate values are "fed back" to the inputs of two of the basic cells, for example 52 and 54, and second intermediate values $J_n^2$, $n = 1, 0, 3$ and 4, are produced. These second intermediate variables are "fed back" to but a single basic cell, for example, 54, and processed to produce third intermediate values $J_0^3$ and $J_4^3$.

Thus far, the basic cells 50, 52 and 54 have implemented, in parallel, the processing technique of the present invention, as shown in Fig. 3, but only for a portion, or "partition" of the superlattice, corresponding in width to the number of parallel basic cells employed. This partition will be referred to as "Partition 1". After processing Partition 1, the basic cells 50, 52 and 54 are now supplied with autocorrelation coefficients $r_3$-$r_7$, in order to implement a second partition, referred to in Fig. 6 as "Partition 2". The basic cells process the autocorrelation coefficients, to produce the first intermediate values $J_n^1$, $n = -3, -4, -5, 5, 6$ and 7, which values are "fed back" to the basic cells 50, 52 and 54, along with two of the first intermediate values $J_{-2}^1$ and $J_4^1$ produced and stored during the processing of the first partition. The basic cells 50, 52 and 54 then process these values, in parallel, to produce the second intermediate values $J_n^2$, $n = -4, -3, -2, 5, 6$ and 7. In a similar manner, these values are "fed back" to the basic cells 50, 52 and 54, along with two of the second intermediate values, $J_{-1}^2$ and $J_4^2$, produced and stored during the first partition, and the basic cells process those values, in parallel, to thereby derive the third intermediate values, $J_n^3$ $n = 3, -2, -1, 5, 6$ and 7. The third intermediate values are "fed back" to the basic cells, along with the third intermediate values, $J_0^3$ and $J_4^3$, produced and stored during Partition 1, to produce the fourth intermediate variables $J_n^4$, n = − 2, − 1, 0, 5, 6, and 7. Since no fourth intermediate values were produced during Partition 1, only six fourth intermediate values are available and are applied to two of the basic cells, for example, 52 and 54. The six values are processed therein, in parallel, to produce the fifth intermediate variables $J_n^5$, n = − 1, 0, 6 and 7, which are in turn "fed back" to one of the basic cells, 54, for example, to thereby provide the sixth intermediate variables $J_7^6$ and $J_0^6$. As will be appreciated, during the processing of the first two partitions, the lattice coefficients which have been produced (k1-k7) are also stored.

It will also be appreciated that during the processing of Partitions 1 and 2, basic cells 50, 52 and 54 operate to "cut through" the superlattice in parallel, in order to provide lattice coefficients $k_2$-$k_4$, in Partition 1, and then recursively "cut through" the superlattice in parallel, to produce lattice coefficients $k_5$-$k_7$ in Partition 2. There now only remains the processing for the last lattice coefficient $k_8$, which is accomplished in a third partition, "Partition 3". Since the system is of order 8, the processing during Partition 3 requires but a single basic cell, which can be any one of cells 50, 52 or 54.

Specifically, autocorrelation coefficients $r_6$-$r_8$ are applied to the selected basic cell and processed to produce the first intermediate values $J_8^1$ and $J_{-6}^1$. These values are "fed back" to the basic cell, along with two of the first intermediate values, namely $J_7^1$ and $J_{-5}^1$, produced and stored during Partition 2. These values are processed to produce second intermediate values $J_8^2$ and $J_{-5}^2$. The above process is repeated until the completion of Partition 3, at which time the last lattice coefficient $k_8$ can be produced.

Thus, when the superlattice of the present invention is implemented using the partitioned parallel implementation, the effective signal flow is fully parallel within any one partition, allowing high-speed processing, yet recursive, or sequential, from partition to partition, thus allowing the processing of a signal from a very high order system using a limited, feasible number of basic cells.

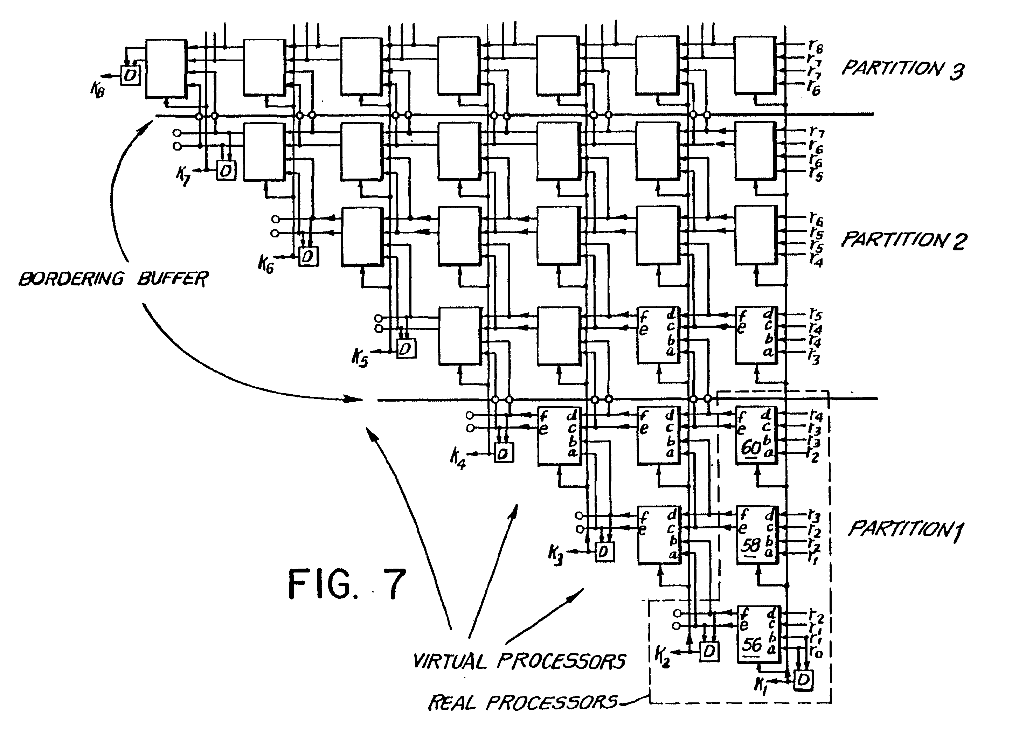

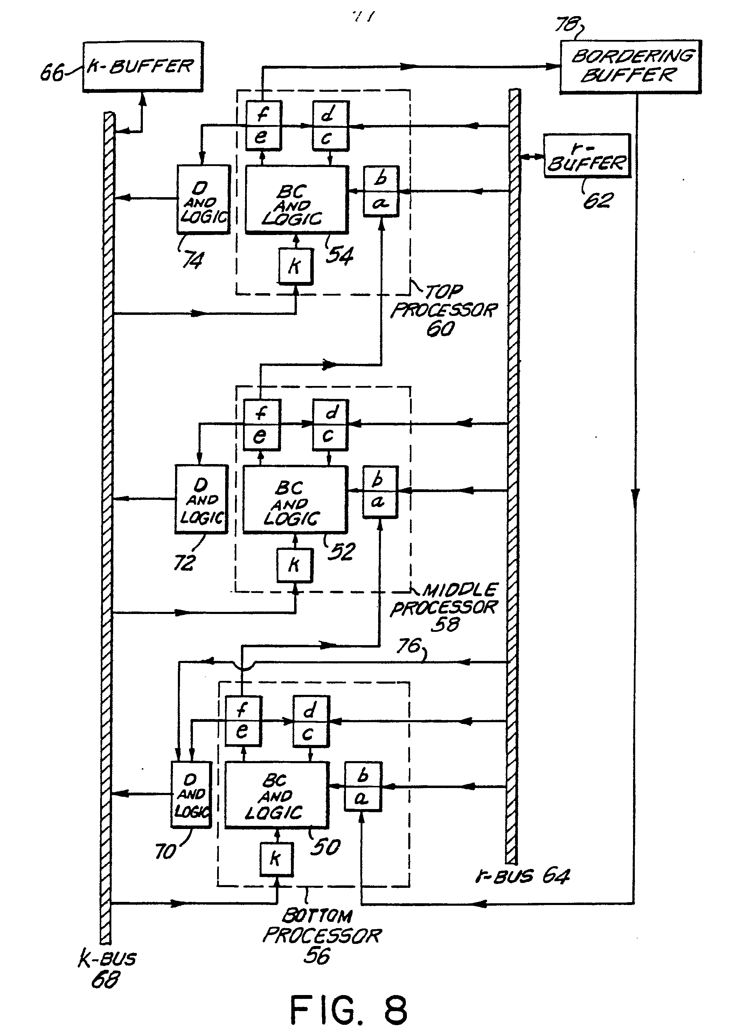

A specific example of the partial partitioned implementation will now be described with further reference to Figs. 7 and 8. As shown in Fig. 7, the signal processor is implemented using three parallel processors, 56, 58 and 60, designated "real processors", which include the basic cells 50, 52 and 54 of Fig. 6. As mentioned above, each of the processors 56, 58 and 60 can implement a basic cell either as one "two-cycled" processor, or as two "one-cycled" processors. Since the basic cells need only function to multiply and add, they readily lend themselves to implementation in the form of inexpensive and simple "reduced instruction set" (RIS) processors. Also shown in Fig. 7 are a plurality of other processors, termed "virtual processors", the existence of which is simulated, in order to process an input signal in accordance with the superlattice structure of Fig. 6.

Referring to Fig. 8, the parallel processors 56, 58 and 60 are shown as comprising the basic cells 50, 52 and 54, respectively, of Fig. 6. Each processor also comprises an "a, b Register", a "c, d Register", an "e, f Register" and a "k Register", which function to individually store values a, b, c, d, e and f, associated with each basic cell (see Fig. 4), and values k associated with lattice coefficients. An "r buffer" 62 is provided for receiving the autocorrelation coefficients $r_0$ ... $r_p$, and communicates with the processors 56, 58 and 60 by way of an "r bus" 64. Each of the a, b Registers and c, d Registers in each of the processors 56, 58 and 60, receives autocorrelation coefficients directly from the r bus 64. A "k buffer" 66 provides lattice coefficients k to each of the k Registers in processors 56, 58 and 60, via k bus 68. Dividers and associated logic 70, 72 and 74 are associated with the processors 56, 58 and 60, respectively, and function to receive an output from the e, f Register of its associated processor, produce the lattice coefficients associated therewith, and deliver them to the k Registers of the processors, and the k Buffer 66, via k bus 68. In addition, divider and logic 70 associated with the bottom processor 56, is also in communication with r bus 64 via bus 76, for the special function of the calculation of $k_1$, the first lattice coefficient, from autocorrelation coefficients $r_0$ and $r_1$.

Although a separate divider 70, 72 and 74 is shown as being provided for each processor 56, 58 and 60, a single divider and logic will suffice for the entire signal processor, and it is envisioned that when the present invention is embodied in a custom VLSI circuit, only a single divider will be provided. On the other hand, in the case where off-the-shelf commercial processors are used, separate dividers can be provided as shown, and may in fact form a part of each of the processors 56, 58 and 60. In the latter case, the use of all of the dividers is not necessary, and the requisite divisions can be performed by any one of the processors.

Within each processor, it is seen that the a, b Register, the c, d Register, and the k Register each provide signals to their associated basic cells, while the output of each basic cell is applied to its associated e, f Register. Each e, f Register provides an output to its associated c, d Register and divider.

Between processors, the output of the e, f Register of the bottom processor 56 is applied to the a, b Register of middle processor 58, while the output of the e, f Register in the middle processor 58 is applied to the a, b Register of the top processor 60. The output of the e, f Register of the top processor 60 is similarly applied to the input of the a, b Register of the bottom processor 56, by way of a bordering buffer 78.

The operation of the hardware shown in Fig. 8 to produce the superlattice processing structure illustrated in Figs. 6 and 7 will now be described.

Phase 0 — Initial Division ($k_1$ computation) : The divider attached to the bottom-processor accepts the first two correlation coefficients from the r-buffer and produces $k_1$. All other elements are idle.

Phase 1 — Initialization of partition 1 : The a, b and c, d registers of all processors are initialized through the r-bus with the proper autocorrelation coefficients.

Phase 2 — Basic cell computations : The basic-cells of all processors compute intermediate values and store them in the e, f registers of each processor.

Phase 3 — $k_2$ computation — storage — transmission : The divider attached to the bottom processor computes $k_2$ from the e, f, register of this processor. $k_2$ is stored in the k-buffer and transmitted to the k-register of each processor through the k-bus.

Phase 4 — Initialization of a, b and c, d registers, update of the bordering buffer : The following transfers take place :

  e, f of the bottom processor → a, b of the middle processor.

  e, f of the middle processor → a, b of the top processor.

  e, f of the top processor → the bordering buffer.

  e, f of the middle processor → c, d of the middle processor.

  e, f of the top processor → c, d of the top processor.

Phase 5 — Basic cell computations with the bottom processor idle : The basic cells of the middle and top elements produce intermediate values which are stored in the corresponding e, f registers.

Phase 6 — $k_3$ computation — storage — transmission : The divider attached to the middle processor computes $k_3$, fed by the e, f registers of this processor. $k_3$ is stored in the k-buffer and transmitted to the k-register of each processor through the k-bus.

Phase 7 — Initialization of a, b and c, d registers, update of the bordering buffer : The following transfers take place :

  e, f of the middle processor → a, b of the top processor.

  e, f of the top processor → bordering buffer.

  e, f of the top processor → c, d of the top processor.

Phase 8 — Top basic cell computation with the bottom and the middle processor idle :
The top basic cell computes intermediate values which are stored in its e, f registers.

Phase 9 — $k_4$ computation — storage : The divider attached to the top-processor computes $K_4$, fed by the e, f registers of that processor. $k_4$ is stored in the k-buffer, but it is not transmitted to the k-registers.

Phase 10 — $k_1$ retransmission : $k_1$, which has been stored in the k-buffer, is transmitted to the k-registers of all processors through the k-bus.

Phase 11 — Initialization of partition 2 : The a, b and c, d registers of all processors are initialized through the r-bus with the proper autocorrelation coefficients.

Phase 12 — Basic cells computation : The basic cells of all processors compute intermediate values and store them in the e, f registers of each processor.

Phase 13 — Initialization of the a, b and c, d registers, update of the bordering buffer : The following transfers take place :

  e, f of the bottom processor → a, b of the middle processor.

  e, f of the middle processor → a, b of the top processor.

  e, f of the bottom processor → c, d of the processor.

  e, f of the middle processor → c, d of the processor.

  e, f of the top processor → c, d of the processor.

  e, f of the top processor → bordering buffer.

The a, b register of the bottom processor must be initialized from the bordering buffer before the contents of the latter are destroyed by the storage of the newly computed contents of e, f in the top processor.

Phase 14 — Basic cell computation : The same as phase 12.

Phase 15 — a, b, c, d initialization, update of bordering buffer : The same as phase 13.

Phase 16 — Basic cell computation : The same as phase 12.

Phase 17 — a, b, c, d initialization, update of Bordering Buffer The same as phase 13.

Phase 18 — Basic cell computation : The same as phase 12.

Phase 19 — $k_5$ computation — storage transmission : The same as phase 3, but $k_5$ is computed — stored — transmitted instead of $k_2$.

Phase 20 — a, b, c, d initialization, bordering buffer updating : The same as phase 4, but e, f are stored in a different register of the bordering buffer.

Phase 21 — Basic cell computations with the bottom processor idle : The same as phase 5.

Phase 22 — $k_6$ computation — storage — transmission : The same as phase 6, but $k_6$ is computed-sto-

red-transmitted instead of $k_3$.

Phase 23 — a, b, c, d initialization, bordering buffer updating : The same as phase 7, but e, f of the top processor are stored in different registers of the bordering buffer.

Phase 24 — top basic cell computations with bottom and middle processors idle : The same as phase 8.

Phase 25 — $k_7$ computation — storage : The same as phase 9, but $k_7$ is computed and stored instead of $k_4$.

Phase 26 — $k_1$ retransmission : The same as phase 10.

Phase 27 — Initialization of partition 3 : The same as phase 11.

The continuation through the third partition will be understood by those skilled in the art in view of the foregoing.

It will be seen that the storage of intermediate values via the bordering buffer 78, in Fig. 8, is indicated, in Fig. 7 by a small circle in the data path as it crosses the functional location of the bordering buffer 78. It will thus be realized that the use of parallel processors in the partitioned parallel implementation introduces a "bordering discontinuity", leading to the organization of the hardware illustrated in Fig. 7.

In the example provided in Figs. 6, 7 and 8, three parallel processors have been shown to illustrate the functioning of the partitioned parallel implementation, because of its general nature. It exhibits a lack of symmetry with regard to the behavior of each processor. For example, the middle processor 58 does not communicate with the bordering buffer. The top processor applies data to the bordering buffer, while the bottom processor receives data from the bordering buffer. Thus, the number of processors can be extended to as many as needed, by simply adding more processors of the "middle" type.

The superlattice concept is suitable for efficient hardware implementation with commercially available processors. A small number of processors, i.e., 3 to 6, may be used for many applications with very good results and a substantial increase in processing speed over that of prior art signal processors.

A computer program written in Pascal is provided in Appendix 3, below for simulating the parallel partitioned implementation of Figs. 6-8, in the manner described above. Furthermore, the appended computer program can be modified by those skilled in the art, in a straightforward manner, in order to drive a multiprocessor version of the present invention, such as that shown in Fig. 8.

It will thus be appreciated that the present invention allows the use of a feasible number of parallel processors to perform highly efficient linear prediction signal processing. When so implemented, the "parallel-partitioned" implementation provides the benefits of parallel processing, manageable hardware complexity, and optimal signal processing for a given number of available processors.

APPENDIX 1

```
(***********************************************************************)
(*
(*   NAME:   AR_PAR                                                     *)
(*                                                                      *)
(*   PURPOSE:    COMPUTER SIMULATION OF LINEAR PREDICTION,              *)
(*               USING A PARALLEL IMPLEMENTATION OF THE                 *)
(*                        SCHUR RECURSIONS ON THE SUPERLATTICE          *)
(*   PARAMETERS:                                                        *)
(*       INPUT:   mo:ORDER OF THE PREDICTOR                             *)
(*                r :AUTOCORRELATION SEQUENSE                           *)
(*       OUTPUT:  k :LATTICE (PARCOR)  COEFFICIENTS                     *)
(*                                                                      *)
(*   PARAMETER TYPES:                                                   *)
(*     cortype:  ARRAY[0..mo] OF REAL                                   *)
(*    pcortype:  ARRAY[1..mo] OF REAL                                   *)
(*                                                                      *)
(***********************************************************************)
procedure AR_PAR(mo:integer; r:cortype;
                        var  k: pcortype) ;
var a,b:array[0..50] of real;
    c,d:real;
    j,n:integer;

begin
    for j:=1 to mo do a[j]:=r[j];
    for j:=0 to mo do b[j]:=r[j];
    k[1]:=-r[1]/r[0];

    for n:=1 to mo-1 do
    begin
       for j:=2 to (mo-n+1) do
       begin
          c:=a[j]+k[n]*b[j-1];
          d:=b[j-2]+k[n]*a[j-1];
          a[j-1]:=c;
          b[j-2]:=d
       end;
       k[n+1]:=-a[1]/b[0]
    end
end; (*   procedure AR_PAR   *)
```

## APPENDIX 2

```
(**********************************************************************)
(*                                                                    *)
(*   NAME   :   AR_OR                                                  *)
(*                                                                    *)
(*   PURPOSE   : COMPUTER SIMULATION  OF LINEAR PREDICTION             *)
(*               USING AN ORDER-RECURSIVE IMPLEMENTATION              *)
(*                          OF THE SCHUR  RECURSIONS ON THE            *)
(*                                      SUPERLATTICE                   *)
(*   PARAMETERS:                                                       *)
(*       INPUT:   mo:ORDER OF THE PREDICTOR                            *)
(*                r :AUTOCORRELATION SEQUENSE                          *)
(*       OUTPUT:  k :LATTICE (PARCOR)  COEFFICIENTS                    *)
(*                                                                    *)
(*   PARAMETER TYPES:                                                  *)
(*     pcortype:   ARRAY[0..mo] OF REAL                                *)
(*      cortype:   ARRAY[1..mo] OF REAL                                *)
(*                                                                    *)
(**********************************************************************)
procedure AR_OR(mo:integer; r: cortype;
                     var  k: pcortype)

var  a,b:array[1..50] of real;
     c,d,e,f:real;
     j,n:integer;

begin
    a[1]:=r[1];
    b[1]:=r[0];
    k[1]:=-r[1]/r[0];
    for j:=2 to mo do
    begin
       e:=r[j];
       f:=r[j-1];
       for n:=1 to j-1 do
       begin
          c:=e+k[n]*f;
          d:=b[n]+k[n]*a[n];
          a[n]:=e;
          b[n]:=f;
          e:=c;
          f:=d;
       end;
       k[j]:=-e/f;
       a[j]:=e;
       b[j]:=f
    end;
end;
```

APPENDIX 3

```
program simulation (input,output);

type      tr =array [0..100] of real;
          tk =array [1..100] of real;

var       r :tr;
          k :tk;
          system_order,l :integer;

(+*+*+*+*+*+*+*+*+*+*+*+*+*+*+*+*+*+*+*+*+*+*+*+*+*+*+*+*+*+*+*+*+*+*+*+*+*+*+*+**)

procedure partitioned_parallel(system_order :integer; r :tr; var k :tk);

(*This procedure simulates the partitioned parallel implementation of the
  superlattice. using three (two cycled) processors which work concurrent-
  ly. It accepts the autocorrelation coefficients 'r' and the sytem order
  as input and produces the reflection coefficients 'k'. *)

const     nbr_of_processors = 3;

type      tb = array [1..100,1..2] of real;

var       rest,nbr_of_partitions,level,max_level,max_level_minus_1:integer;
          a_bottom,b_bottom,a_bottom_temp,b_bottom_temp:real;
          a_middle,b_middle,a_middle_temp,b_middle_temp:real;
          bor_buffer1_temp,bor_buffer2_temp:real;
          partition,proc:integer;
          bor_buffer:tb;
          e_top,f_top:real;
          e_middle,f_middle:real;
          e_bottom,f_bottom:real;

   (*   The designation of parameters

        a_bottom,b_bottom,a_bottom_temp,b_bottom_temp
        a_middle,b_middle,a_middle_temp,b_middle_temp
        bor_buffer1_temp,bor_buffer2_temp
        e_top,f_top,e_middle,f_middle,e_bottom,f_bottom

        is made for programming convenience only and is unrelated to the
        register names appearing in the diagram of fig. 8. *)

(+*+*+*+*+*+*+*+*+*+*+*+*+*+*+*+*+*+*+*+*+*+*+*+*+*+*+*+*+*+*+*+*+*+*+*+*+*+*+*+**)

   procedure initialize ( partition,proc : integer; var a,b,c,d : real );

   var    offset : integer;

   begin
       offset:=(partition-1)*3-1+proc;
       a:=r[offset];
       b:=r[offset+1];
       c:=b;
       d:=r[offset+2]
   end; (* of procedure initialize *)
```

```
(*******************************************************************)

    procedure basic_cell ( a,b,c,d,k_mult : real: var e,f : real);

    begin
        f:=d+c+k_mult;
        e:=a+b+k_mult
    end: (* of procedure initialize *)

(*******************************************************************)

    procedure bottom_processor ( partition,level : integer;
                                 bb1,bb2 : real:
                                 var a_bottom,b_bottom : real;
                                 var e,f:real ):

    var a,b,c,d,k_mult : real;

    begin
        if level=1 then
            initialize ( partition,1,a,b,c,d )
                    else
            begin
                a:=bb1:
                b:=bb2:
                c:=e:
                d:=f:
            end:
        k_mult:=k[level];
        basic_cell ( a,b,c,d,k_mult,e,f ):
        a_bottom:=e:
        b_bottom:=f
    end: (* of procedure bottom_processor *)

(*******************************************************************)

    procedure middle_processor ( partition,level : integer:
                                 a_bottom,b_bottom : real:
                                 var a_middle,b_middle : real;
                                 var e,f:real ):

    var a,b,c,d,k_mult : real;

    begin
        if level=1 then
            initialize ( partition,2,a,b,c,d )
                    else
            begin
                a:=a_bottom:
                b:=b_bottom;
                c:=e:
                d:=f
            end:
        k_mult:=k[level];
        basic_cell ( a,b,c,d,k_mult,e,f );
        a_middle:=e:
        b_middle:=f
    end: (* of procedure middle_processor *)
```

```
( +++++++++++++++++++++++++++++++++++++++++++++++++++++++++++++++++++++++++++++++++)

     procedure top_processor ( partition.level : integer;
                               a_middle,b_middle : real;
                               var bor_buffer:tb;
                               var e,f:real ):

     var   a,b,c,d,k_mult : real;

     begin
        if level=1 then
           initialize ( partition,3,a,b,c,d )
                  else
           begin
              a:=a_middle;
              b:=b_middle;
              c:=e:
              d:=f
           end:
        k_mult:=k[level];
        basic_cell ( a,b,c,d,k_mult,e,f );
        bor_buffer[level,1]:=e;
        bor_buffer[level,2]:=f
     end: (* of procedure top_processor *)
```

```
(#+++#+++++#+++#+++++#+++#+++++++++++++++++++++++++++++++++++++++++++++++++)

    begin

        rest:=(system_order-1) mod nbr_of_processors;
        nbr_of_partitions:=(system_order-1) div nbr_of_processors;
        if rest<>0 then nbr_of_partitions:=nbr_of_partitions+1;

        k[1]:=-r[1]/r[0];

        for partition:=1 to nbr_of_partitions do
            begin
                max_level:=partition*nbr_of_processors;
                for level:=1 to max_level-2 do
                    begin
                        a_bottom_temp:=a_bottom;
                        b_bottom_temp:=b_bottom;

                        bottom_processor ( partition,level,
                                        bor_buffer1_temp,bor_buffer2_temp,
                                        a_bottom,b_bottom,e_bottom,f_bottom);

                        a_middle_temp:=a_middle;
                        b_middle_temp:=b_middle;

                        middle_processor ( partition,level,
                                        a_bottom_temp,b_bottom_temp,
                                        a_middle,b_middle,e_middle,f_middle);

                        bor_buffer1_temp:=bor_buffer[level,1];
                        bor_buffer2_temp:=bor_buffer[level,2];

                        top_processor ( partition,level,
                                        a_middle_temp,b_middle_temp,
                                        bor_buffer,e_top,f_top);
                    end; (* of level loop *)

                max_level_minus_1:=max_level-1;

                k[max_level_minus_1]:=-b_bottom/a_bottom;

                a_middle_temp:=a_middle;
                b_middle_temp:=b_middle;

                middle_processor ( partition,max_level_minus_1,a_bottom,b_bottom,
                                a_middle,b_middle,e_middle,f_middle);

                k[max_level]:=-b_middle/a_middle;

                top_processor ( partition,max_level_minus_1,
                                a_middle_temp,b_middle_temp,
                                bor_buffer,e_top,f_top );

                top_processor ( partition,max_level,
                                a_middle,b_middle,
                                bor_buffer,e_top,f_top );

                k[max_level+1]:=-bor_buffer[max_level,2]/bor_buffer[max_level,1]

            end;

    end; (* of procedure partitioned_parallel *)
```

```
begin

  (* Test data *)
  r[0] := 1;
  r[1] :=-0.2133256;
  r[2] := 0.2076102;
  r[3] :=-0.3665574;
  r[4] :=-0.2301161;
  r[5] := 0.2941363;
  r[6] :=-0.2480958;
  r[7] := 0.7792566;
  r[8] :=-0.1939328;
  r[9] := 0.2779704;
  r[10]:=-0.4803222;
  system_order:=10;

  (* The results are the following :

  k[1] = 0.2133256
  k[2] =-0.1698310
  k[3] = 0.3166915
  k[4] = 0.4394402
  k[5] =-0.3670546
  k[6] = 0.2772087
  k[7] =-0.6954674
  k[8] =-0.1866846
  k[9] =-0.0412548
  k[10]= 0.3096930    *)

  partitioned parallel(system_order.r.k);

  for M=1 to system_order do writeln(k[i]);

    end.
[ok ]
```

## Claims

1. A signal processor which receives autocorrelation coefficients $r_i$ with $i = [0 - p]$ corresponding to a system having order p, for providing lattice coefficients $k_j$ with $j = [1 - p]$ of said system, comprising
an input device (62) for receiving said autocorrelation coefficients,
a plurality of processing units (50, 52, 54) each including a processor (44 ; Fig. 4) which multiplies values at a first (b) and a second (c) input by a lattice coefficient $(k_j)$, resulting in a first and a second product, and individually adds values at third and fourth inputs (a, d) to said first and second product respectively,
a first structure to re-apply the outputs (e, f) from said plurality of parallel processing units to the inputs (a, b, c, d) of at least one of said parallel processing units, such that
during a first time interval in each processor, the first and second inputs (b, c) receive respectively a first one of said autocorrelation coefficients to be multiplied by a first lattice coefficient $(k_1)$, and the third and fourth inputs (a, d) receive a selected pair of said autocorrelation coefficients, adjacent to said first of said coefficients, to yield a pair of first intermediate values

$$(\varsigma^1_{-(i-1)} ; \varsigma^1_{i+1})$$

17

at the outputs (e, f) of each processor, and during a second time interval, the pairs of first intermediate values are re-applied to the processor inputs by said first structure to thereby multiply a selected two of said first intermediate values by a second lattice coefficient to produce a pair of second products, and to individually add a pair of said first intermediate values, adjacent to said selected two of said first intermediate values, to said pair of second products, to yield at least a pair of second intermediate values, and divider circuitry (70, 72, 74) for forming the quotient of a selected pair of said autocorrelation coefficients to produce said first lattice coefficient, and for forming the quotient of a selected pair of first intermediate values to produce said second lattice coefficient, characterized in that the number of processing units is less than the system order p, and that a second structure (78) is provided which stores selected ones of said first and second intermediate values and selectively retrieves, during appropriate time intervals, subsequent to said second time interval, the stored intermediate values therefrom for application to appropriate inputs of said processing units such that further pairs of intermediate values are produced when further remaining autocorrelation coefficients are applied to said processors.

2. In a signal processor which receives autocorrelation coefficients $r_i$ with i = [0 – p] corresponding to a system having order p, a method for providing lattice coefficients $k_j$ with j = [1 – p] of said system, comprising

applying said autocorrelation coefficients to a plurality of processing units (50, 52, 54) each including a processor (44 ; Fig. 4) which multiplies values at a first (b) and a second (c) input by a lattice coefficient ($k_j$), resulting in a first and a second product, and individually adds values at third and fourth inputs (a, d) to said first and second product respectively,

re-applying the outputs (e, f) from said plurality of parallel processing units to the inputs (a, b, c, d) of at least one of said parallel processing units, such that

during a first time interval in each processor, the first and second inputs (b, c) receive respectively a first one of said autocorrelation coefficients to be multiplied by a first lattice coefficient ($k_1$), and the third and fourth inputs (a, d) receive a splected pair of said autocorrelation coefficients, adjacent to said first of said coefficients, to yield a pair of first intermediate values

$$( \xi^1_{-(i-1)} ; \; \xi^1_{i+1} )$$

at the outputs (e, f) of each processor, and during a second time interval, the pairs of first intermediate values are re-applied to the processor inputs to thereby multiply a selected two of said first intermediate values by a second lattice coefficient to produce a pair of second products, and to individually add a pair of said first intermediate values, adjacent to said selected two of said first intermediate values, to said pair of second products to yield at least a pair of second intermediate values, and

forming the quotient of a selected pair of said autocorrelation coefficients to produce said first lattice coefficient, and forming the quotient of a selected pair of first intermediate values to produce said second lattice coefficient, characterised by providing a number of processing unit less than the system order p, and storing selected ones of said first and second intermediate values and selectively retrieving, during appropriate time intervals, subsequent to said second time interval, the stored intermediate values for application to appropriate inputs of said processing units such that further pairs of intermediate values are produced when further remaining autocorrelation coefficients are applied to said processors.

3. A signal processor which receives autocorrelation coefficients $r_i$ with i = [–(p) – p] corresponding to a system having order p, for providing normal and adjoint lattice coefficients $k_j$ and $k_j^*$, respectively, with j = [1 – p] of said system, comprising

an input device (62) for receiving said autocorrelation coefficients,

a plurality of processing units (50, 52, 54) each including a processor (44 ; Fig. 4) which multiplies values at a first (c) and a second (b) input by normal and adjoint lattice coefficient ($k_j$, $k_j^*$), respectively, resulting in a first and a second product, and individually adds values at third and fourth inputs (d, a) to said first and second product respectively,

a first structure to re-apply the outputs (e, f) from said plurality of parallel processing units to the inputs (a, b, c, d) of at least one of said parallel processing units, such that

during a first time interval in each processor, the first and second inputs (b, c) receive respectively a first one of said autocorrelation coefficients to be multiplied by first normal and adjoint lattice coefficients ($k_1$, $k_1^*$), respectively, and the third and fourth inputs (d, a) receive a selected pair of said autocorrelation coefficients, adjacent to said first of said coefficients, to yield a pair of first intermediate values

$$( \zeta_{i+1}^1; \quad \xi_{i-1}^1 )$$

at the outputs (f, e) of each processor, and during a second time interval, the pairs of first intermediate values are re-applied to the processor inputs by said first structure to thereby multiply a selected two of said first intermediate values by respective second normal and adjoint lattice coefficients to produce a pair of second products, and to individually add a pair of said first intermediate values, adjacent to said selected two of said first intermediate values, to said pair of second products, to yield at least a pair of second intermediate values, and divider circuitry for forming the quotient of a selected pair of said autocorrelation coefficients to produce said normal and adjoint first lattice coefficients, and for forming the quotient of a selected pair of first intermediate values to produce said second normal and adjoint lattice coefficients, characterized in that the number of processing units is less than the system order p, and that a second structure (78) is provided which stores selected ones of said first and second intermediate values and selectively retrieves, during appropriate time intervals, subsequent to said second time interval, the stored intermediate values therefrom for application to appropriate inputs of said processing units such that further pairs of intermediate values are produced when further remaining autocorrelation coefficients are applied to said processors.

4. In a signal processor which receives autocorrelation coefficients $r_i$ with i = [–(p) – p] corresponding to a system having order p, a method for providing normal and adjoint lattice coefficients $k_j$ and $k_j^*$, respectively, with j = [1 – p] of said system, comprising

applying said autocorrelation coefficients to a plurality of processing units (50, 52, 54) each including a processor (44 ; Fig. 4) which multiplies values at a first (c) and a second (b) input by normal and adjoint lattice coefficients ($k_j$, $k_j^*$), respectively, resulting in a first and a second product, and individually adds values at third and fourth inputs (d, a) to said first and second product respectively,

re-applying the outputs (e, f) from said plurality of parallel processing units to the inputs (a, b, c, d) of at least one of said parallel processing units, such that

during a first time interval in each processor, the first and second inputs (c, b) receive respectively a first one of said autocorrelation coefficients to be multiplied by first normal and adjoint lattice coefficient ($k_1$, $k_1^*$), and the third and fourth inputs (d, a) receive a selected pair of said autocorrelation coefficients, adjacent to said first of said coefficients, to yield a pair of first intermediate values

$$( \zeta_{i+1}^1; \quad \xi_{i-1}^1 )$$

at the outputs (e, f) of each processor, and during a second time interval, the pairs of first intermediate values are re-applied to the processor inputs to thereby multiply a selected two of said first intermediate values by respective second normal and adjoint lattice coefficients to produce a pair of second products, and to individually add a pair of said first intermediate values, adjacent to said selected two of said first intermediate values, to said pair of second products to yield at least a pair of second intermediate values, and forming the quotient of a selected pair of said autocorrelation coefficients to produce said first normal and adjoint lattice coefficients, and forming the quotient of a selected pair of first intermediate values to produce said second normal and adjoint lattice coefficients, characterized by providing a number of processing units less than the system order p, and storing selected ones of said first and second intermediate values and selectively retrieving, during appropriate time intervals, subsequent to said second time interval, the stored intermediate values for application to appropriate inputs of said processing units such that further pairs of intermediate values are produced when further remaining autocorrelation coefficients are applied to said processors.

## Patentansprüche

1. Signalprozessor, der Autokorrelationskoeffizienten $r_i$ mit i = [0 – p] entsprechend einem System der Ordnung p zur Erzeugung von Gitterkoeffizienten $k_j$ mit j = [1 – p] des Systems erhält, mit

einer Eingabevorrichtung (62) zur Annahme der Autokorrelationskoeffizienten,

einer Anzahl von Verarbeitungseinheiten (50, 52, 54) mit jeweils einem Prozessor (44 ; Fig. 4), der Werte an einem ersten (b) und einem zweiten (c) Eingang mit einem Gitterkoeffizienten ($k_j$) mit dem Ergebnis eines ersten und eines zweiten Produkts multipliziert und der einzeln Werte an dritten und vierten Eingän-

gen (a, d) zu dem ersten bzw. zweiten Produkt addiert,

einer ersten Anordnung zum erneuten Anlegen der Ausgangssignale (e, f) aus der Anzahl von parallelen Verarbeitungseinheiten an die Eingänge (a, b, c, d) wenigstens einer der parallelen Verarbeitungseinheiten, derart, daß

während eines ersten Zeitintervalles in jedem Prozessor die ersten und zweiten Eingänge (b, c) jeweils einen ersten der Autokorrelationskoeffizienten erhalten, der mit einem ersten Gitterkoeffizienten ($k_1$) multipliziert wird, und die dritten und vierten Eingänge (a, d) ein ausgewähltes Paar der Autokorrelationskoeffizienten, die an den ersten der Koeffizienten angrenzen, erhalten, um ein Paar von ersten Zwischenwerten

$$(\mathsf{S}^1_{-(i-1)}, \; S^1_{i+1})$$

an den Ausgängen (e, f) eines jeden Prozessors zu erzeugen, und daß während eines zweiten Zeitintervalles die Paare von ersten Zwischenwerten durch die erste Anordnung erneut an die Prozessoreingänge angelegt werden, um dadurch ausgewählte zwei der ersten Zwischenwerte mit einem zweiten Gitterkoeffizienten zu multiplizieren, um ein Paar von zweiten Produkten zu erzeugen, und um einzeln ein Paar der ersten Zwischenwerte, die an die ausgewählten beiden der ersten Zwischenwerte angrenzen, zu dem Paar von zweiten Produkten zu addieren, um wenigstens ein Paar von zweiten Zwischenwerten zu erhalten, und mit einer Teilerschaltung (70, 72, 74) zur Bildung des Quotienten aus einem ausgewählten Paar von Autokorrelationskoeffizienten zur Erzeugung des ersten Gitterkoeffizienten und zur Bildung des Quotienten aus einem ausgewählten Paar von ersten Zwischenwerten, um die zweiten Gitterkoeffizienten zu erzeugen, dadurch **gekennzeichnet,** daß die Anzahl der Verarbeitungseinheiten kleiner ist als die Ordnung p des Systems, und daß eine zweite Anordnung (78) vorgesehen ist, die ausgewählte der ersten und zweiten Zwischenwerte speichert und die selektiv während geeigneter Zeitintervalle, die auf das zweite Zeitintervall folgen, die gespeicherten Zwischenwerte zum Anlegen an geeignete Eingänge der Verarbeitungseinheiten wieder ausliest, derart, daß weitere Paare von Zwischenwerten erzeugt werden, wenn weitere verbleibende Autokorrelationskoeffizienten den Prozessoren zugeführt werden.

2. In einem Signalprozessor, der Autokorrelationskoeffizienten $r_i$ mit i = [0 – p] entsprechend einem System der Ordnung p erhält, ein Verfahren zur Erzeugung von Gitterkoeffizienten $k_j$ mit j = [1 – p] des Systems, mit

dem Anlegen der Autokorrelationskoeffizienten an eine Anzahl von Verarbeitungseinheiten (50, 52, 54) mit jeweils einem Prozessor (44 ; Fig. 4), der Werte an einem ersten (b) und einem zweiten (c) Eingang mit einem Gitterkoeffizienten ($k_j$) mit dem Ergebnis eines ersten und eines zweiten Produkts multipliziert und der einzeln Werte an dritten und vierten Eingängen (a, d) zu dem ersten bzw. zweiten Produkt addiert,

dem erneuten Anlegen der Ausgangssignale (e, f) aus der Anzahl von parallelen Verarbeitungseinheiten an die Eingänge (a, b, c, d) wenigstens einer der parallelen Verarbeitungseinheiten, derart, daß

während eines ersten Zeitintervalles in jedem Prozessor die ersten und zweiten Eingänge (b, c) jeweils einen ersten der Autokorrelationskoeffizienten erhalten, der mit einem ersten Gitterkoeffizienten ($k_1$) multipliziert wird, und die dritten und vierten Eingänge (a, d) ein ausgewähltes Paar der Autokorrelationskoeffizienten, die an den ersten der Koeffizienten angrenzen, erhalten, um ein Paar von ersten Zwischenwerten

$$(S^1_{-(i-1)}, \; S^1_{i+1})$$

an den Ausgängen (e, f) eines jeden Prozessors zu erzeugen, und daß während eines zweiten Zeitintervalles die Paare von ersten Zwischenwerten durch die erste Anordnung erneut an die Prozessoreingänge angelegt werden, um dadurch ausgewählte zwei der ersten Zwischenwerte mit einem zweiten Gitterkoeffizienten zu multiplizieren, um ein Paar von zweiten Produkten zu erzeugen, und um einzeln ein Paar der ersten Zwischenwerte, die an die ausgewählten beiden der ersten Zwischenwerte angrenzen, zu dem Paar von zweiten Produkten zu addieren, um wenigstens ein Paar von zweiten Zwischenwerten zu erhalten, und mit

dem Bilden des Quotienten aus einem ausgewählten Paar von Autokorrelationskoeffizienten zur Erzeugung des ersten Gitterkoeffizienten und dem Bilden des Quotienten aus einem ausgewählten Paar von ersten Zwischenwerten, um die zweiten Gitterkoeffizienten zu erzeugen, **gekennzeichnet** durch das Vorsehen einer Anzahl von Verarbeitungseinheiten, die kleiner ist als die Ordnung p des Systems, und das Speichern von ausgewählten der ersten und zweiten Zwischenwerte und das selektive Wiederauslesen, während geeigneter Zeitintervalle, die auf das zweite Zeitintervall folgen, der gespeicherten Zwischenwerte zum Anlegen an geeignete Eingänge der Verarbeitungseinheiten, derart, daß weitere Paare von Zwischenwerten erzeugt werden, wenn weitere verbleibende Autokorrelationskoeffizienten den Prozessoren zugeführt werden.

3. Signalprozessor, der Autokorrelationskoeffizienten $r_i$ mit i = [–(p) – p) entsprechend einem System der Ordnung p zur Erzeugung normaler und angrenzender Gitterkoeffizienten $k_j$ bzw. $k_j^*$ mit j = [1 – p] des Systems erhält, mit

einer Eingabevorrichtung (62) zur Annahme der Autokorrelationskoeffizienten,

einer Anzahl von Verarbeitungseinheiten (50, 52, 54) mit jeweils einem Prozessor (44 ; Fig. 4), der Werte an einem ersten (c) und einem zweiten (b) Eingang mit einem normalen bzw. angrenzenden Gitterkoeffizienten ($k_j$, $k_j^*$) mit dem Ergebnis eines ersten und eines zweiten Produkts multipliziert und der einzeln Werte an dritten und vierten Eingängen (d, a) zu dem ersten bzw. zweiten Produkt addiert,

einer ersten Anordnung zum erneuten Anlegen der Ausgangssignale (e, f) aus der Anzahl von parallelen Verarbeitungseinheiten an die Eingänge (a, b, c, d) wenigstens einer der parallelen Verarbeitungseinheiten, derart, daß

während eines ersten Zeitintervalles in jedem Prozessor die ersten und zweiten Eingänge (b, c) jeweils einen ersten der Autokorrelationskoeffizienten erhalten, der mit einem ersten normalen bzw. angrenzenden Gitterkoeffizienten ($k_1$, $k_1^*$) multipliziert wird, und die dritten und vierten Eingänge (d, a) ein ausgewähltes Paar der Autokorrelationskoeffizienten, die an den ersten der Koeffizienten angrenzen, erhalten, um ein Paar von ersten Zwischenwerten

$$(\varsigma_{i+1}^{1}, \ \varsigma_{i-1}^{1})$$

an den Ausgängen (f, e) eines jeden Prozessors zu erzeugen, und daß während eines zweiten Zeitintervalles die Paare von ersten Zwischenwerten durch die erste Anordnung erneut an die Prozessoreingänge angelegt werden, um dadurch ausgewählte zwei der ersten Zwischenwerte mit jeweils einem zweiten normalen und angrenzenden Gitterkoeffizienten zu multiplizieren, um ein Paar von zweiten Produkten zu erzeugen, und um einzeln ein Paar der ersten Zwischenwerte, die an die ausgewählten beiden der ersten Zwischenwerte angrenzen, zu dem Paar von zweiten Produkten zu addieren, um wenigstens ein Paar von zweiten Zwischenwerten zu erhalten, und

mit einer Teilerschaltung zur Bildung des Quotienten aus einem ausgewählten Paar von Autokorrelationskoeffizienten zur Erzeugung des normalen und angrenzenden ersten Gitterkoeffizienten und zur Bildung des Quotienten aus einem ausgewählten Paar von ersten Zwischenwerten, um die zweiten normalen und angrenzenden Gitterkoeffizienten zu erzeugen, dadurch **gekennzeichnet,** daß die Anzahl der Verarbeitungseinheiten kleiner ist als die Ordnung p des Systems, und daß eine zweite Anordnung (78) vorgesehen ist, die ausgewählte der ersten und zweiten Zwischenwerte speichert und die selektiv während geeigneter Zeitintervalle, die auf das zweite Zeitintervall folgen, die gespeicherten Zwischenwerte zum Anlegen an geeignete Eingänge der Verarbeitungseinheiten wieder ausliest, derart, daß weitere Paare von Zwischenwerten erzeugt werden, wenn weitere verbleibende Autokorrelationskoeffizienten den Prozessoren zugeführt werden.

4. In einem Signalprozessor, der Autokorrelationskoeffizienten $r_i$ mit i = [–(p) – p] entsprechend einem System der Ordnung p erhält, ein Verfahren zur Erzeugung normaler und angrenzender Gitterkoeffizienten $k_j$ bzw. $k_j^*$ mit j = [1 – p] des Systems, mit

dem Anlegen der Autokorrelationskoeffizienten, an eine Anzahl von Verarbeitungseinheiten (50, 52, 54) mit jeweils einem Prozessor (44 ; Fig. 4), der Werte an einem ersten (c) und einem zweiten (b) Eingang mit einem normalen bzw. angrenzenden Gitterkoeffizienten ($k_j$, $k_j^*$) mit dem Ergebnis eines ersten und eines zweiten Produkts multipliziert und der einzeln Werte an dritten und vierten Eingängen (d, a) zu dem ersten bzw. zweiten Produkt addiert,

dem erneuten Anlegen der Ausgangssignale (e, f) aus der Anzahl von parallelen Verarbeitungseinheiten an die Eingänge (a, b, c, d) wenigstens einer der parallelen Verarbeitungseinheiten, derart, daß

während eines ersten Zeitintervalles in jedem Prozessor die ersten und zweiten Eingänge (c, b) jeweils einen ersten der Autokorrelationskoeffizienten erhalten, der mit einem ersten normalen und angrenzenden Gitterkoeffizienten ($k_1$, $k_1^*$) multipliziert wird, und die dritten und vierten Eingänge (d, a) ein ausgewähltes Paar der Autokorrelationskoeffizienten, die an den ersten der Koeffizienten angrenzen, erhalten, um ein Paar von ersten Zwischenwerten

$$(\varsigma_{i+1}^{1}, \ \varsigma_{i-1}^{1})$$

an den Ausgängen (e, f) eines jeden Prozessors zu erzeugen, und daß während eines zweiten Zeitintervalles die Paare von ersten Zwischenwerten durch die erste Anordnung erneut an die Prozessoreingänge angelegt werden, um dadurch ausgewählte zwei der ersten Zwischenwerte mit jeweils einem zweiten normalen und angrenzenden Gitterkoeffizienten zu multiplizieren, um ein Paar von zweiten Produkten zu erzeugen, und um

EP 0 275 259 B1

einzeln ein Paar der ersten Zwischenwerte, die an die ausgewählten beiden der ersten Zwischenwerte angrenzen, zu dem Paar von zweiten Produkten zu addieren, um wenigstens ein Paar von zweiten Zwischenwerten zu erhalten, und dem Bilden des Quotienten aus einem ausgewählten Paar von Autokorrelationskoeffizienten zur Erzeugung des ersten normalen und angrenzenden Gitterkoeffizienten und dem Bilden des Quotienten aus einem ausgewählten Paar von ersten Zwischenwerten, um die zweiten normalen und angrenzenden Gitterkoeffizienten zu erzeugen, **gekennzeichnet** durch das Vorsehen einer Anzahl von Verarbeitungseinheiten, die kleiner ist als die Ordnung p des Systems, und das Speichern von ausgewählten der ersten und zweiten Zwischenwerte und das selektive Wiederauslesen, während geeigneter Zeitintervalle, die auf das zweite Zeitintervall folgen, der gespeicherten Zwischenwerte zum Anlegen an geeignete Eingänge der Verarbeitungseinheiten, derart, daß weitere Paare von Zwischenwerten erzeugt werden, wenn weitere verbleibende Autokorrelationskoeffizienten den Prozessoren zugeführt werden.

## Revendications

1. Processeur de signaux qui reçoit des coefficients d'auto-corrélation $r_i$, ou i = [0 – p], correspondant à un sustème d'ordre p, pour réaliser des coefficients $k_j$ de maillage dudit système, où j = [1 – p], comprenant

un dispositif (62) d'entrée pour recevoir lesdits coefficients d'auto-corrélation,

une pluralité d'unités de traitement (50, 52, 54) comportant chacune un processeur (44 ; Fig. 4) qui, a une première (b) et une seconde (c) entrées, multiplie des valeurs par un coefficient de maillage (ki), ce qui a pour résultat un premier et un second produits et, à la troisième et à la quatrième entrées (a, d), additionne individuellement des valeurs respectivement auxdits premier et second produits,

une première structure pour réappliquer les sorties (e, f) de ladite pluralité d'unités de traitement en parallèle, aux entrées (a, b, c, d) d'au moins une desdites unités de traitement en parallèle, de telle façon que

pendant un premier laps de temps, dans chaque processeur, les première et seconde entrées (b, c) reçoivent respectivement un premier desdits coefficients d'auto-corrélation à multiplier par un premier coefficient de maillage ($k_1$), et les troisième et quatrième entrées (a, d) reçoivent une paire choisie desdits coefficients d'autocorrélation, contigus auxdits premiers desdits coefficients, pour produire une paire de premières valeurs intermédiaires

$$( \zeta^1_{(i-1)} \; ; \; \zeta^1_{i+1} )$$

aux sorties (e, f) de chaque processeur, et pendant un second laps de temps, les paires de premières valeurs intermédiaires sont réappliquées aux entrées des processeurs par ladite première structure, pour multiplier de ce fait deux valeurs, choisies parmi lesdites premières valeurs intermédiaires, par un second coefficient de maillage afin de produire une paire de seconds produits, et pour additionner individuellement une paire desdites premières valeurs intermédiaires, contiguës auxdites deux valeurs choisies parmi lesdites premières valeurs intermédiaires, a ladite paire de seconds produits, afin de produire au moins une paire de secondes valeurs intermédiaires, et des éléments formant un circuit diviseur (70, 72, 74) pour former le quotient d'une paire de coefficients choisis parmi lesdits coefficients d'auto-corrélation afin de produire ledit premier coefficient de maillage, et pour former le quotient d'une paire de valeurs choisies parmi les premières valeurs intermédiaires afin de produire ledit second coefficient de maillage, caractérisé en ce que le nombre d'unités de traitement est inférieur à l'ordre p du système, et en ce qu'une seconde structure (78) est prévue pour mémoriser des premières et secondes valeurs intermédiaires sélectionnées et, pendant des laps de temps appropriés, postérieurs audit second laps de temps, extraire sélectivement de celle-ci les valeurs intermédiaires mémorisées pour les appliquer à des entrées appropriées desdites unités de traitement de façon que d'autres paires de valeurs intermédiaires soient produites lorsque d'autres coefficients d'auto-corrélation restants sont appliqués auxdits processeurs.

2. Dans un processeur de signaux qui reçoit des coefficients d'auto-corrélation $r_i$, où i = [0 – p], correspondant à un système d'ordre p, un procédé pour réaliser des coefficients de maillage $k_j$ dudit système, où j = [– P], comprenant

l'application desdits coefficients d'auto-corrélation à une pluralité d'unités de traitement (50, 52, 54) comportant chacune un processeur (44 ; Fig. 4) qui, à une première (b) et une seconde (c) entrées, multiplie des valeurs par un coefficient de maillage ($k_j$), ce qui a pour résultat un premier et un second produits et, à la troisième et à la quatrième entrées (a, d), additionne individuellement des valeurs respectivement auxdits premier et second produits,

la réapplication des sorties (e, f) de ladite pluralité d'unités de traitement en parallèle, aux entrées (a, b,

22

c, d) d'au moins une desdites unités de traitement en parallèle, de telle façon que

pendant un premier laps de temps, dans chaque processeur, les première et secondes entrées (b, c) reçoivent respectivement un premier desdits coefficients d'auto-corrélation à multiplier par un premier coefficient de maillage ($k_1$), et les troisième et quatrième entrées (a, d) reçoivent une paire choisie desdits coefficients d'autocorrélation, contigus auxdits premiers desdits coefficients, pour produire une paire de premières valeurs intermédiaires

$$(\zeta^1_{-(i-1)}; \zeta^1_{i+1})$$

aux sorties (e, f) de chaque processeur, et pendant un second laps de temps, les paires de premières valeurs intermédiaires sont réappliquées aux entrées des processeurs, pour multiplier de ce fait deux valeurs, choisies parmi lesdites premières valeurs intermédiaires, par un second coefficient de maillage afin de produire une paire de seconds produits, et pour additionner individuellement une paire desdites premières valeurs intermédiaires, contiguës auxdites deux valeurs choisies parmi lesdites premières valeurs intermédiaires, à ladite paire de seconds produits, afin de produire au moins une paire de secondes valeurs intermédiaires, et

la formation du quotient d'une paire de coefficients choisis parmi lesdits coefficients d'auto-corrélation afin de produite ledit premier coefficient de maillage, et la formation du quotient d'une paire de valeurs choisies de premières valeurs intermédiaires afin de produire ledit second coefficient de maillage, caractérisé par la présence d'un nombre d'unités de traitement inférieur à l'ordre p du système, et la mémorisation de premières et secondes valeurs intermédiaires sélectionnées et, pendant des laps de temps appropriés, postérieurs audit second laps de temps, l'extraction sélective, des valeurs intermédiaires mémorisées en vue de leur application à des entrées appropriées desdites unités de traitement de façon que d'autres paires de valeurs intermédiaires soient produites lorsque d'autres coefficients d'auto-corrélation restants sont appliqués auxdits processeurs.

3. Processeur de signaux qui reçoit des coefficients d'auto-corrélation $r_i$, où $i = [-(p) - p]$, correspondant à un système d'ordre p, pour produire des coefficients de maillage normal et adjoint dudit système, respectivement $k_j$ et $k_j^*$ où $j = [1 - p]$, comprenant

un dispositif (62) d'entrée pour recevoir lesdits coefficients d'auto-corrélation,

une pluralité d'unités de traitement (50, 52, 54) comportant chacune un processeur (44 ; Fig. 4) qui, à une première (c) et une seconde (b) entrées, multiplie des valeurs par des coefficients de maillage normal et adjoint, respectivement ($k_j$, $k_j^*$), ce qui a pour résultat un premier et un second produits et, à la troisième et à la quatrième entrées (d, a), additionne individuellement des valeurs respectivement auxdits premier et second produits,

une première structure pour réappliquer les sorties (e, f) de ladite pluralité d'unités de traitement en parallèle, aux entrées (a, b, c, d) d'au moins une desdites unités de traitement en parallèle, de telle façon que

pendant un premier laps de temps, dans chaque processeur, les première et seconde entrées (b, c) reçoivent respectivement un premier desdits coefficients d'auto-corrélation à multiplier par des premiers coefficients de maillage normal et adjoint, respectivement ($k_1$, $k_1^*$), et les troisième et quatrième entrées (d, a) reçoivent une paire choisie desdits coefficients d'autocorrélation, contigus auxdits premiers desdits coefficients, pour produire une paire de premières valeurs intermédiaires

$$(\zeta^1_{i+1}; \zeta^1_{i-1})$$

aux sorties (f, e) de chaque processeur, et pendant un second laps de temps, les paires de premières valeurs intermédiaires sont réappliquées aux entrées des processeurs par ladite première structure, pour multiplier de ce fait deux valeurs, choisies parmi lesdites premières valeurs intermédiaires, par des seconds coefficients de maillage normal et adjoint respectifs afin de produire une paire de seconds produits, et pour additionner individuellement une paire desdites premières valeurs intermédiaires, contiguës auxdites deux valeurs choisies parmi lesdites premières valeurs intermédiaires, ladite paire de seconds produits, afin de produire au moins une paire de secondes valeurs intermédiaires, et

des éléments formant un circuit diviseur pour former le quotient d'une paire de coefficients choisis parmi lesdits coefficients d'auto-corrélation afin de produire lesdits premiers coefficients de maillage normal et adjoint, et pour former le quotient d'une paire de valeurs choisies parmi les premières valeurs intermédiaires afin de produire lesdits seconds coefficients de maillage normal et adjoint, caractérisé en ce que le nombre d'unités de traitement est inférieur à l'ordre p du système, et en ce qu'une seconde structure (78) est prévue pour mémoriser des premières et secondes valeurs intermédiaires sélectionnées et, pendant des laps de temps appropriés, postérieurs audit second laps de temps, extraire sélectivement de celle-ci les valeurs intermédiaires mémorisées pour les appliquer a des entrées appropriées desdites unités de traitement de façon que d'autres paires de valeurs intermédiaires soient produites lorsque d'autres coefficients d'auto-corrélation restants sont appliqués auxdits processeurs.

4. Dans un processeur de signaux qui reçoit des coefficients d'auto-corrélation $r_i$, où $i = [-(p) - p]$, correspondant à un système d'ordre p, un procédé pour réaliser des coefficients de maillage normal et adjoint dudit système, respectivement $k_j$ et $k_j^*$, où $j = [1 - p]$, comprenant

l'application desdits coefficients d'auto-corrélation à une pluralité d'unités de traitement (50, 52, 54) comportant chacune un processeur (44 ; Fig. 4) qui, à une première (c) et une seconde (b) entrées, multiplie des valeurs par des coefficients de maillage normal et adjoint, respectivement ($k_j$, $k_j^*$), ce qui a pour résultat un premier et un second produits et, à la troisième et à la quatrième entrées (d, a), additionne individuellement les valeurs respectivement auxdits premier et second produits,

la réapplication des sorties (e, f) de ladite pluralité d'unités de traitement en parallèle, aux entrées (a, b, c, d) d'au moins une desdites unités de traitement en parallèle, de telle façon que

pendant un premier laps de temps, dans chaque processeur, les première et seconde entrées (c, b) reçoivent respectivement un premier desdits coefficients d'auto-corrélation à multiplier par des premiers coefficients de maillage normal et adjoint ($k_1$, $k_1^*$), et les troisième et quatrième entrées (d, a) reçoivent une paire choisie desdits coefficients d'auto-corrélation, contigus auxdits premiers desdits coefficients, pour produire une paire de premières valeurs intermédiaires

$$( \zeta^1_{i+1} ; \zeta^1_{i-1} )$$

aux sorties (e, f) de chaque processeur, et pendant un second laps de temps, les paires de premières valeurs intermédiaires sont réappliquées aux entrées des processeurs, pour multiplier de ce fait deux valeurs, choisies parmi lesdites premières valeurs intermédiaires, par des seconds coefficients de maillage normal et adjoint respectifs afin de produire une paire de seconds produits, et pour additionner individuellement une paire desdites premières valeurs intermédiaires, contiguës auxdites deux valeurs choisies parmi lesdites premières valeurs intermédiaires, à ladite paire de seconds produits, afin de produire au moins une paire de secondes valeurs intermédiaire, et la formation du quotient d'une paire de coefficients choisis parmi lesdits coefficients d'auto-corrélation afin de produire lesdits premiers coefficients de maillage normal et adjoint, et la formation du quotient d'une paire choisie de premières valeurs intermédiaires afin de produire lesdits seconds coefficients de maillage normal et adjoint, caractérisé par la présence d'un nombre d'unités de traitement inférieur à l'ordre p du système, et la mémorisation de premières et secondes valeurs intermédiaires sélectionnées et, pendant des laps de temps appropriés, postérieurs audit second laps de temps, l'extraction sélective des valeurs intermédiaires mémorisées en vue de leur application à des entrées appropriées desdites unités de traitement de façon que d'autres paires de valeurs intermédiaires soient produites lorsque d'autres coefficients d'auto-corrélation restants sont appliqués auxdits processeurs.

FIG. I

$k_4, k_4^*$

$k_3, k_3^*$

$k_2, k_2^*$

$k_1, k_1^*$

$J_5^0 = r_5$

$\xi_4^0 = r_4$

$J_4^0 = r_4$

$\xi_3^0 = r_3$

$J_3^0 = r_3$

$\xi_2^0 = r_2$

$J_2^0 = r_2$

$\xi_1^0 = r_1$

$J_1^0 = r_1$

$\xi_0^0 = r_0$

$J_0^0 = r_0$

$\xi_{-1}^0 = r_{-1}$

$J_{-1}^0 = r_{-1}$

$\xi_{-2}^0 = r_{-2}$

$J_{-2}^0 = r_{-2}$

$\xi_{-3}^0 = r_{-3}$

$J_{-3}^0 = r_{-3}$

$\xi_{-4}^0 = r_{-4}$

$J_{-4}^0 = r_{-4}$

$\xi_{-5}^0 = r_{-5}$

FINAL VALUES

THIRD INTERMEDIATE VALUES

SECOND INTERMEDIATE VALUES

FIRST INTERMEDIATE VALUES

SYSTEM SIGNAL → DIGITAL AUTO-CORRELATOR

AUTO-CORRELATION COEFICIENTS

10

12

14

16

18

20

22

24

26

28

25

FIG. 2

FIG. 3

$$f = d + k_j \cdot c$$

$$e = a + k_j \cdot b$$

FIG. 4

BASIC CELL 1 ———

BASIC CELL 2 — — —

BASIC CELL 3 • • • • • • •

FIG. 5

FIG. 6

FIG. 7

PARTITION 3

PARTITION 2

PARTITION 1

BORDERING BUFFER

VIRTUAL PROCESSORS

REAL PROCESSORS

EP 0 275 259 B1

FIG. 8